(19) Europäisches Patentamt
European Patent Office
Office européen des brevets

(11) **EP 2 040 336 B1**

(12) **EUROPÄISCHE PATENTSCHRIFT**

(45) Veröffentlichungstag und Bekanntmachung des Hinweises auf die Patenterteilung:
**09.09.2015 Patentblatt 2015/37**

(21) Anmeldenummer: **08013584.1**

(22) Anmeldetag: **29.07.2008**

(51) Int Cl.:
*H01Q 21/06* (2006.01)   *H01Q 25/00* (2006.01)
*B66B 13/14* (2006.01)   *B66B 13/26* (2006.01)
*G01S 3/36* (2006.01)   *G01S 7/03* (2006.01)
*G01S 13/56* (2006.01)   *G01S 13/88* (2006.01)

(54) **Radarsensor**

Radar sensor

Capteur de radar

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **03.08.2007 DE 102007036809**

(43) Veröffentlichungstag der Anmeldung:
**25.03.2009 Patentblatt 2009/13**

(73) Patentinhaber: **InnoSenT GmbH**
**97499 Donnersdorf (DE)**

(72) Erfinder:
• **Weidmann, Dr. Wolfgang**
**97359 Schwarzach (DE)**
• **Mock, Robert**
**97499 Traustadt (DE)**

(74) Vertreter: **Küchler, Stefan**
**Patentanwalt**
**Färberstrasse 20**
**90402 Nürnberg (DE)**

(56) Entgegenhaltungen:
EP-A- 1 304 764       EP-A- 1 548 458
DE-A1- 10 012 115     DE-A1- 10 234 291
DE-A1-102004 059 915  GB-A- 2 414 124

**Beschreibung**

Die Erfindung richtet sich auf einen Radarsensor, vorzugsweise für kurze bis mittlere Entfernungen von bspw. etwa 20 m, insbesondere für Türöffneranwendungen, mit einer Sendeantenne zum Abstrahlen eines Mikrowellensignals.

Die DE 198 29 762 A1 offenbart ein Verfahren zum Betrieb eines mindestens zwei Antennen zur Erfassung unterschiedlicher Winkelbereiche aufweisenden Radarsystems. Da alle Antennen über einen gemeinsamen Antennenwahlschalter angeschlossen sind, kann stets nur eine einzige Antenne betrieben werden. Dies bedeutet, dass während des Betriebs einer Antenne als Sendeantenne keine davon getrennte Empfangsantenne zur Verfügung steht; vielmehr muß kurz darauf eine Umschaltung vorgenommen werden, so dass ein derartiges Verfahren einerseits extrem schnelle und damit teure Schaltelemente erfordert und andererseits ein sinnvoller Betrieb im sog. "Nahbereich" von wenigen Metern, wo das Signal nahezu unverzögert zurückkehrt, nicht möglich ist. Denn die Umschaltzeit von einer Sendeantenne zu einer Empfangsantenne beim Wechsel vom Sendebetrieb vom Empfangsbetrieb dauert etwa 5 ns. Das abgestrahlte Signal legt mit Lichtgeschwindigkeit in diesem Zeitraum etwa 1,5 m zurück, so dass Objekte, welche näher sind als etwa 1 m, mit dieser Vorrichtung nicht erkannt werden können. Ein Türöffner kann damit nicht betrieben werden.

Die EP 1 548 458 A2 zeigt ein Radarsystem gemäss dem Oberbegriff des unabhängigen Anspruchs 1. Das System beinhaltet mehrere, getrennt voneinander betreibbare, Sende- und Empfangsantennen, wobei die Empfanganstennen teils unterschiedliche Breiten der Empfangskeulen aufweisen, diese aber nicht in die gleiche Richtung weisen.

Aus diesen Nachteilen des beschriebenen Standes der Technik resultiert das die Erfindung initiierende Problem, einen Radarsensor für kurze bis mittlere Entfernungen zu schaffen, der mit einem geringsten Schaltungsaufwand sowie möglichst ohne permanente Schaltverluste im Bereich der Antennen betrieben werden kann.

Die Lösung dieses Problems gelingt bei einem einen Radarsensor gemäss Anspruch 1.

Kraft der Erfindung kann bei jeder Messung das reflektierte Signal sofort aufgefangen werden, weil keine Umschaltung der Antennen erforderlich ist und diese daher das reflektierte Signal simultan mit dessen Abstrahlung auffangen können. Am Ausgang dieser Antennen erhält man allerdings im Allgemeinen Signale mit unterschiedlichen Amplituden entsprechend den unterschiedlichen Antennendiagrammen. Aus dem Verhältnis dieser Amplituden können sodann Rückschlüsse auf die Lage eines reflektierenden Objektes gezogen werden. Dabei kann die weitere Auswertung der reflektierten Signale, insbesondere deren Mischung mit dem Sendesignal und/oder bspw. eine gegenseitige Korrelation, für jede Empfangsantenne simultan erfolgen, oder - insbesondere bei einer digitalen Auswertung - sequentiell nacheinander, sofern wenigstens eines der empfangenen und vorzugsweise herabgemischten Signale bspw. in digitalisierter Form zwischengespeichert ist. Solchenfalls kann jeder Empfangsantennenzweig bis zu einem Analog-Digital-Wandler fest verdrahtet sein, d.h., ohne aufwendige Schaltelemente. Die Verarbeitung signalabwärts der Analog-Digital-Wandler erfolgt sodann in einem Mikroprozessor, ggf. in einem schnellen Signalprozessor, der nur integrierte Schaltelemente aufweist, insbesondere im Rahmen der arithmetisch-logischen Einheit, wo also ebenfalls keine externen Schaltelemente erforderlich sind. Mangels derartiger Schaltelemente wird die Anordnung sehr störungsunanfällig und damit betriebssicher, außerdem sehr präzise, weil insbesondere im HF-Bereich der Empfangsantennen an den dortigen, optimal angepaßten Wellenleitern keine störenden Reflexionen erzeugt werden, und schließlich deutlich preiswerter, weil auf teure HF-Schaltelemente verzichtet werden kann. Die Entkopplung zwischen beiden Empfangsantennen, und/oder zwischen allen Antennen, sollte wenigstens 20 dB betragen oder mehr.

Der Abstand zwischen den Flächenschwerpunkten der Empfangsantennen liegt bevorzugt in der Größenordnung zwischen $\lambda/2$ und $2\lambda$, wobei $\lambda$ die Freiraumwellenlänge bezeichnet.

Vorzugsweise haben wenigstens zwei Empfangsantennen jeweils unterschiedliche Antennendiagramme.

Es hat sich als günstig erwiesen, dass die Breite des Hauptmaximums einer Empfangsantenne größer ist als die Breite des Hauptmaximums der andern Empfangsantenne. Ein solcher Unterschied zwischen den Antennendiagrammen beider Empfangsantennen ist am markantesten, weil damit innerhalb des breiteren Antennendiagramms, wo überhaupt reflektierende Objekte erkannt werden, mittels der zweiten Antenne nochmals ein zentraler Ausschnitt gebildet wird, und somit erkannt werden kann, ob sich ein erkanntes Objekt seitlich bzw. außerhalb des zentralen Bereichs befindet oder innerhalb eben dieses Bereichs. Mit der "Breite" des Hauptmaximums kann etwa ein Abfall der Empfangsamplitude auf die Hälfte der maximalen Amplitude angesehen werden (also auf etwa ein Viertel der aufgenommenen Empfangsleistung entsprechend 6 dB). Da aber bei dem obigen Merkmal nur auf das Verhältnis zwischen zwei Breiten abgestellt wird, ist die genaue Definition des Begriffs "Breite" in diesem Zusammenhang nicht von erheblicher Bedeutung - man kann auch für die Breiten die jeweiligen Werte der Antennendiagramme bei einem Abfall von -10 dB oder sogar von - 20 dB heranziehen, jedoch an beiden Empfangsantennen einheitlich. Die Breite ist dabei ein Winkelwert, bspw. bei einer Abweichung von ± 20° um die Hauptachse (Hauptempfangsrichtung) der Antenne (wo die Empfangsfeldstärke oder Empfangsleistung um einen vorgewählten Wert von bspw. 10 dB abgesunken ist) wäre die Breite 40°, bei einer Abweichung von ± 30° wäre die Breite 60°, etc.

Die Breite des Hauptmaximums einer Empfangsantenne sollte wenigstens um den Faktor 1,2 größer sein als die Breite des Hauptmaximums der andern Empfangsantenne, vorzugsweise um einen Faktor 1,3 größer, insbesondere um einen Faktor 1,5 größer. Sind die Unterschiede zwischen den Antennendiagrammen zu gering, werden die daraus ableitbaren Rückschlüsse relativ ungenau, weil dann evtl. ungewollte Streuungen der Antennenparameter sich relativ stark auswirken können.

Die Reichweite bzw. das Empfindlichkeitsmaximum beider Empfangsantennen sollte etwa gleich groß sein, damit die am Ausgang der Antennen angeschlossenen Bauelemente (Leitungen, Mischer, Verstärker, Analog-Digital-Wandler) identisch ausgeführt werden können und - bei einer guten Paarung dieser Bauteile - die empfangenen Amplitudenwerte um gleiche Verhältnisse verstärkt werden.

Die Erfindung empfiehlt, die beiden Empfangsantennen derart parallel zueinander auszurichten, dass die Richtungen zu ihrem jeweiligen Empfindlichkeitsmaximum (Hauptmaximum) parallel zueinander sind oder um weniger als 10° gegeneinander abweichen, vorzugsweise um weniger als 5°, insbesondere um weniger als 2°. Daraus folgt, dass die beiden Hauptempfangsachsen sich nicht schneiden. Damit ergeben sich vereinfachte Verhältnisse insofern, als die Lage eines Punktes auf einer Hauptempfangsachse relativ zu der anderen Hauptempfangsachse - insbesondere sein Abstand zu der zweiten Hauptempfangsachse - unabhängig von seiner Entfernung von dem Radarsensor ist.

Diese Maßnahme läßt sich dadurch weiterbilden, dass die beiden Empfangsantennen in horizontaler und/oder in vertikaler Richtung gegeneinander versetzt sind. Jedes reflektierende Objekt begrenzter Ausdehnung wird daher von der einen oder von der anderen Antenne besser empfangen, was etwa in dem Bereich zwischen den beiden Hauptempfangsachsen sowie in deren Umgebung eine zusätzliche Auswertung dahingehend erlaubt, ob sich ein Objekt eher auf der einen oder eher auf der anderen Seite einer (vertikalen) Symmetrieebene zwischen den beiden Empfangsantennen befindet. Durch das hohe Empfangssignal an beiden Antennen erkennt der Radarsensor, dass sich das betreffende Objekt etwa im Zentrum des überwachten Bereichs befindet. Bei genauer Kenntnis der beiden Antennendiagramme läßt eben das Verhältnis zwischen den beiden Empfangsfeldstärken - in Relation zu den jeweiligen Absolutwerten - die Ermittlung eines Abstandes des betreffenden Objektes von der (vertikalen) Symmetrieebene zwischen den beiden Empfangsantennen zu. In Kenntnis des vom Radarsensor gelieferten Abstandes kann demnach die Lage eines Objektes innerhalb einer zweidimensionalen Ebene, welche durch die Hauptempfangsachsen der beiden Empfangsantennen aufgespannt wird, zu.

Durch einen gegenseitigen Versatz der beiden Empfangsantennen in horizontaler Richtung - insbesondere quer zu ihrer/ihren Hauptempfangsachse(n) - legt man diese Ebene etwa parallel zum Erdboden und erfaßt dann die Lage aller reflektierenden Objekte als Projektion auf eine horizontale Ebene - was im praktischen Gebrauch völlig ausreichend ist, da die meisten Objekte in vertikaler Richtung ohnehin nur einen begrenzten Bewegungsspielraum haben, der von dem Erdboden einerseits und von der Erdanziehungskraft andererseits begrenzt wird.

Die Breite des Hauptmaximums der Sendeantenne sollte gleich oder größer sein als die Breite des Hauptmaximums der beiden Empfangsantennen, damit auch tatsächlich der von den Empfangsantennen überwachte Bereich von der Sendeantenne komplett bestrahlt wird. Bei der Auswertung der Amplituden der empfangenen Signale muß dann berücksichtigt werden, dass die seitlich abgegebene Sendeleistung geringer ist als die entlang der Hauptsenderichtung abgestrahlte Sendeleistung.

Vorzugsweise ist die Sendeantenne zwischen den beiden Empfangsantennen angeordnet. Dann sind - bei gegebener Gesamtabmessung aller Antennen- die beiden Empfangsantennen maximal weit voneinander entfernt.

Der gegenseitige Versatz der Empfangsantennen ist aus baulichen Gründen meistens vergleichsweise gering - je nach Baugröße einer Antenne bspw. etwa 1 bis 10 cm - so dass zumindest das stärker gedrungene, d.h. schmälere Antennendiagramm der einen Antenne vollständig von dem Antennendiagramm der anderen Antenne überdeckt wird im Gegensatz zu anderen, bekannten Techniken, wo die Antennen gegeneinander verdreht sind, so dass sich ihre Diagramme bzw. Empfangskeulen nur an ihren Rändern bzw. Randbereichen überlappen. Für Objekte im zentralen Bereich werden daher beide Antennen jeweils gleichzeitig eine maximale Empfangsfeldstärke zeigen.

Da andererseits die Antennendiagramme der verwendeten Empfangsantennen nicht identisch sind, sondern sich mit Absicht vergleichsweise deutlich voneinander unterscheiden, ist eine Ermittlung des Ablagewinkels $\alpha$ aus den Phasenlagen $\varphi_1$, $\varphi_2$ der Signale an den den Antennen nachgeschalteten Mischerausgänge nach der Formel $\alpha = \arcsin(\varphi_1 - \varphi_2)$ nicht möglich. Bei sehr dezentralen Objekten weitab der Hauptempfangsrichtung kann aufgrund von sehr kleinen Amplituden an der Empfangsantenne mit schmalem Hauptmaximum keine sichere Aussage darüber getroffen werden, ob sich ein Objekt ganz weit rechts oder ganz weit links befindet. Die Aussagefähigkeit wird jedoch zum Zentrum des überwachten Bereichs zu größer, weil dort anhand der steilen Empfindlichkeitsflanke der Antenne mit dem schmäleren Hauptmaximum der Abstand $x_1$ des Objektes von der Hauptempfangsrichtung dieser Antenne gut abgeschätzt werden kann, bspw. anhand einer abgelegten Tabelle (in der evtl. auch die zur Seite hin abnehmende Strahlungsleistung der Sendeantenne mit berücksichtigt sein kann). Es verbleibt damit noch die Frage, an welcher Flanke des Antennendiagramms das empfangene Signal aufgefangen wurde. Dies kann aufgrund des seitlichen Versatzes d gegenüber der anderen Empfangsantenne ermittelt werden. Für $x_1$ gibt zwei mögliche Werte $x_{2l}$, $x_{2r}$ für den Abstand des Objektes von der Hauptempfangsrichtung der zweiten Antenne, nämlich:

$$x_{2l} = x_1 + d;$$

$$x_{2r} = x_1 - d.$$

Es gilt demnach

$$x_{2l} = x_{2r} + 2 d.$$

Da sich die in Frage kommenden Werte auf Bereiche des Antennendiagramms beziehen, welche um 2 d voneinander abweichen, kann aus den Absolutwerten der Amplituden bzw. aus deren Verhältnis vergleichsweise zuverlässig ein Objekt dem linken oder rechten Ast des Antennendiagramms zugeordnet werden.

Dabei ist allerdings zu berücksichtigen, dass die seitliche Verschiebung $x_1$, $x_2$ eines Objektes nicht mit dem jeweiligen Ablagewinkel $\alpha_1$, $\alpha_2$ identisch ist, sondern auch von der Entfernung r des Objektes abhängt etwa nach der Formel

$$x_1 = r * \sin \alpha_1;$$

$$x_2 = r * \sin \alpha_2.$$

Da der Wert r bei der Radarmessung jedoch ermittelt wird, kann diese Umformung problemlos durchgeführt werden, ggf. anhand einer hinterlegten Tabelle für die Sinusfunktion.

Die Erfindung sieht weiterhin vor, dass beide Empfangsantennen in der selben Technik ausgebildet sind, evtl. sogar auch die Sendeantenne. Solchenfalls können die Empfangsantennen - oder sogar alle Antennen - mit dem selben Verfahren hergestellt werden, evtl. sogar in einem einzigen Arbeitsschritt.

Besondere Vorteile ergeben sich dadurch, dass eine oder beide Empfangsantennen und/oder die Sendeantenne als Flächenantenne(n) und/oder als Planarantenne(n) ausgebildet ist/sind. Bei derartigen Antennen besitzt das abstrahlende Element keine lineare Erstreckung, sondern eine flächige Struktur. Sie eignen sich damit besonders für eine Integration auf Leiterplatten o.ä.

Eine weitergehende Optimierung erfährt die Erfindung dadurch, dass eine oder beide Empfangsantennen und/oder die Sendeantenne als Patchantenne(n) ausgebildet ist/sind. Besonders eignet sich hierbei eine rechteckige oder quadratische Metallisierung auf der Abstrahlseite bzw. -fläche einer Leiterplatte, deren Längskante bzw- -seite einer Länge von λ/2 - bezogen auf die (Mitten-) Frequenz der abgestrahlten Radarwelle - entspricht. Eine solche Metallisierung hat einen ähnlichen Effekt als Resonator wie bei Dipolantennen.

Die Erfindung läßt sich dahingehend weiterbilden, dass eine oder beide Empfangsantennen und/oder die Sendeantenne als Streifenleitungsantenne(n) ausgebildet ist/sind. Dies kann bspw. dadurch geschehen, dass ein abstrahlendes Element in Streifenleitungstechnik auf der Abstrahlseite einer Platine bzw. Leiterplatte realisiert wird, während an der gegenüberliegenden Seite der Leiterplatte - oder in einer Zwischenlage - eine metallische Fläche als elektrisch leitender Rückschluß vorgesehen ist. In dem Zwischenraum zwischen abstrahlendem Element und elektrisch leitfähiger Rückschlußfläche kann sich dann - ähnlich wie in einem Hohlleiter - eine hochfrequente elektrische Schwingung als stehende Welle ausbilden. Durch die Kombination mit einer in einem Abstand, vorzugsweise der Dicke bzw. Lagendicke einer Leiterplatte, dahinter angeordnete, als Refelektor dienenden Metallisierung läßt sich eine Richtwirkung erzielen.

Eine zusätzliche bzw. verbesserte Richtwirkung läßt sich auch dadurch erzeugen, dass eine oder beide Empfangsantennen und/oder die Sendeantenne als Arrayantenne(n) ausgebildet ist/sind, d.h. durch Anordnung mehrerer Patches in einem vorgegebenen Raster neben- bzw. übereinander entlang einer gemeinsamen Außenseite einer Leiterplatte und/oder auch in verschiedenen Lagen einer Leiterplatte. Als Träger eignen sich auch Platinen bzw. Träger aus Keramik. Keramik ist ein sehr guter Isolator und gegenüber Feuchtigkeit unempfindlich. Außerdem hat sie einen geringsten dielektrischen Verlustwinkel.

Die Ankopplung solcher Antennen kann mittels (je) einer Mikrostreifenleitung erfolgen, und/oder durch (je) eine Schlitzkopplung. Die Art der Ankopplung kann Einfluß auf die Breitbandigkeit und/oder auf die Fußpunktimpedanz der Antenne haben.

Die Sendeantenne ist an einen vorzugsweise sensorinternen Oszillator gekoppelt. Dieser ist - je nach Art des Radarverfahrens (Puls und/oder Continuous Wave - CW; Amplituden- und/oder Frequenzmodulation, etc.) auf eine vorgegebene Frequenz oder ein vorgegebenes Frequenzband eingestellt, bspw. auf das 24 GHz ISM-Band.

Insbesondere bei Radarverfahren mit Frequenzmodulation empfiehlt es sich, den Oszillator in seiner Frequenz veränderbar auszugestalten. Hierzu kann die Impedanz eines Schwingkreiselements, insbesondere eine Kapazität, als spannungsabhängiges Schaltkreiselement, insbesondere als Kapazitätsdiode, ausgeführt sein. Durch Veränderung der betreffenden Steuerspannung wird sodann die Resonanzfrequenz des Schwingkreises verstellt.

Bei Radarverfahren mit Amplitudenmodulation, bspw. dem AM- oder dem ASK-Verfahren, oder bei Pulsverfahren ist dagegen eine Vertellbarkeit der Ausgangsleistung des internen Oszillators wichtig, was bspw. durch rasches Ein- und Ausschalten erfolgen kann.

Um auch bei geringer Empfangsfeldstärke ein auswertbares Signal zu erzeugen, kann am Ausgang einer oder vorzugsweise beider Empfangsantennen ein (Vor-) Verstärker angeordnet sein, insbesondere ein HF-Verstärker mit einem möglichst exakt eingestellten Verstärkungsfaktor. Es sollte darauf geachtet werden, den Verstärkungsfaktor so zu wählen, dass auch bei größerer Empfangsfeldstärke das Ausgangssignal am Verstärker nicht in eine Begrenzung läuft, so dass das Ausgangssignal bzw. die Spannungsamplitude am Ausgang des bzw. beider HF-Verstärker stets proportional zu der Spannungsamplitude am Antennenausgang bleibt.

Eine weitere Konstruktionsvorschrift sieht vor, dass an den Ausgang einer oder beider Empfangsantennen und/oder diesen nachgeschalteter Verstärker (je) ein Demodulator angekoppelt ist, und/oder ein Mischer, um das empfangene Signal auf eine Zwischenfrequenz, vorzugsweise die Dopplerfrequenz, herabzumischen. Diesem Zweck dient besonders eine Multiplikation mit der Schwingung am Oszillatorausgang bzw. mit einem Anteil des der Sendeantenne zugeführten Signals. Je nach dem verwendeten Radarverfahren kann es außerdem vorteilhaft sein, jeweils zwei parallel geschaltete Mischer zu verwenden, wobei ein empfangenes Signal in jedem der parallel geschalteten Mischer mit dem Sendesignal verknüpft wird, einmal jedoch wird dabei die Phase eines der zu mischenden Signale verschoben, vorzugsweise um etwa 90°. Dadurch kann verhindert werden, dass bei einer ungünstigen Phasenlage der zu mischenden Signale (bspw. eine Phase von 180°) eine (teilweise) Auslöschung der Signale auftritt, welche die Information eines zurückgestrahlten Signals verdeckt bzw. verschleiert. Es werden hierbei vielmehr die (von der Phasenlage unabhängigen) komplexen Amplituden des Sende- und Empfangssignals berücksichtigt, so dass die charakteristische Amplitude des reflektierten Signals auch nach einem Mischvorgang mit dem gesendeten Signal unabhängig von der Phasenlage erhalten bleibt und ausgewertet werden kann.

Bei der Signalmischung entsteht nicht nur die Summenfrequenz, sondern auch die meist sehr niedrige Differenzfrequenz, die - ggf. nach Herausfiltern höherfrequenter Anteile - von einem nachfolgenden Schaltkreis verarbeitet werden kann, der in konventioneller Schaltkreistechnologie aufgebaut sein kann und keine besonderen Hochfrequenzeigenschaften aufweisen muß. Ggf. kann ein derart niederfrequentes Signal für eine anschließende Auswertung direkt digitalisiert werden, d.h., in bestimmten Zeitabständen abgetastet werden gemäß dem Abtasttheorem, wobei die Abtastwerte sodann von einem Analog-Digital-Wandler gewandelt und in einem Speicher abgelegt werden.

Schließlich entspricht es der Lehre der Erfindung, dass an den Ausgang beider Empfangsantennen eine gemeinsame Auswerteeinheit angeschlossen ist. Je nach dem verwendeten Radarverfahren können darin und/oder in einzelnen Bausteinen der Auswerteeinheit verschiedene Berechnungen angestellt werden; bspw. Laufzeitmessungen, Umwandlungen von Signalfolgen in Spektralfolgen, insbesondere mittels der schnellen Fouriertransformation; Korrelationsbetrachtungen hinsichtlich der Signal- und/oder Spektralfolgen; Ermittlung von Maxima und/oder Minima der der Signal- und/oder Spektralfolgen; Amplitudenvergleiche; Vergleiche mit abgespeicherten Tabellen, bspw. Antennendiagrammen; etc. Für komplexere Berechnungen empfiehlt es sich, Mikrocontroller, Mikroprozessoren oder gar schnelle und leistungsfähige Signalprozessoren zu verwenden. Als Rechenergebnis können einzelne Objekte mit ihren Koordinaten in einem Speicher hinterlegt werden; eine solche Objektliste kann dann regelmäßig gepflegt werden, um dynamische Eigenschaften einzelner Objekte zu erkennen und daraus bspw. Personen mit der Absicht, eine Tür zu durchqueren, herausgefiltert werden, um einen Türöffner im richtigen Moment anzusteuern. Andererseits ist es auch möglich, anstelle einer Verknüpfung der Rückstrahlergebnisse beider Empfangskanäle nur einen von beiden auszuwählen und auszuwerten und sodann - je nach örtlichen Gegebenheiten - einen Türöffner od. dgl. mit den Meßergebnissen eines wählbaren Antennendiagramms anzusteuern. Einem Installateur können daher mehrere Möglichkeiten angeboten werden:

1. Ausleuchtung eines breiten Bereichs mit dem breiten Antennendiagramm alleine;
2. Ausleuchtung eines schmalen Bereichs mit dem schmalen Antennendiagramm alleine;
3. Kombinierte Auswertung zur Verbesserung der Genauigkeit.

Die Umschaltung kann dabei per Software geschehen - entweder mittels einem Programmiergerät, oder durch kleine Schalter auf oder an der Leiterplatte, welche an je einen Digitaleingang eines mit der Auswertung betrauten Chips - Mikrokontroller oder Mikroprozessor - oder eines daran angekoppelten Eingangsbausteins angeschlossen ist. Diese Umschaltung erfolgt nur einmal und bleibt dann stets erhalten - im Gegensatz zu den eingangs zitierten Druckschriften, wo ein permanentes Umschalten zwischen verschiedenen Antennen erforderlich ist.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:

Fig. 1     ein Blockschaltbild der Sende- und Empfangszweige eines erfindungsgemäßen Radarsensors; sowie

Fig. 2     eine Draufsicht auf eine Platine mit den Antennen des Radarsensors nach Fig. 1.

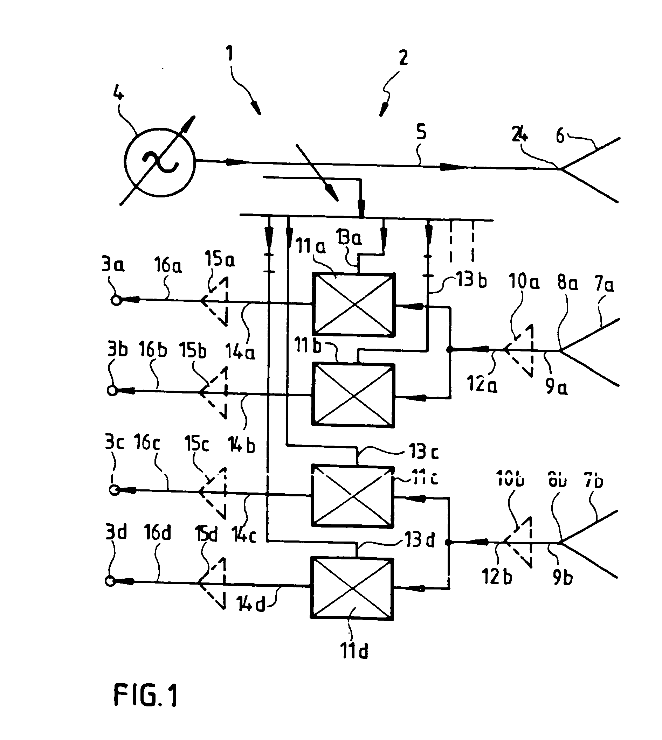

Ein erfindungsgemäßer Radarsensor 1 ist mit einem Hochfrequenz- bzw. HF-Teil 2 nach Fig. 1 versehen, an dessen Ausgang bzw. Ausgängen 3a - 3d eine nicht dargestellte Auswerteeinheit angeschlossen ist, die insbesondere als digitaler Baustein mit einer arithmetisch-logischen Einheit realisiert sein kann, bspw. als Mikroprozessor oder -controller. Diesem kann ggf. neben der Auswertung der empfangenen Signale auch die Steuerung der verstellbaren Schaltkreiselemente des HF-Teils 2 übertragen sein.

Ein derartiges, vorzugsweise verstellbares Schaltkreiselement ist ein sensorinterner Oszillator 4, vorzugsweise in Form eines (Parallel-) Schwingkreises mit einer Induktivität und einer Kapazität, dessen Resonanzfrequenz auf ein gewünschtes Frequenzband eingestellt ist, bspw. auf 24 GHz. Vorzugsweise ist die Kapazität mit einer Kapazitätsdiode aufgebaut, so dass sich durch Anlegen einer (variablen) Gleichspannung die Kapazität und damit auch die Resonanzfrequenz des Oszillators 4 beeinflussen läßt. Die hierzu verwendete Gleichspannung liefert dann ggf. die nicht dargestellte Auswerteschaltung. In ähnlicher Form könnte der Oszillator 4 auch aus- und einschaltbar sein, bspw. durch Kurzschließen am Ausgang mittels eines schnellen Schalters, und/oder durch Abschalten einer Versorgungsspannung; auch die dazu benötigten Ansteuersignale könnte die Auswerteschaltung liefern.

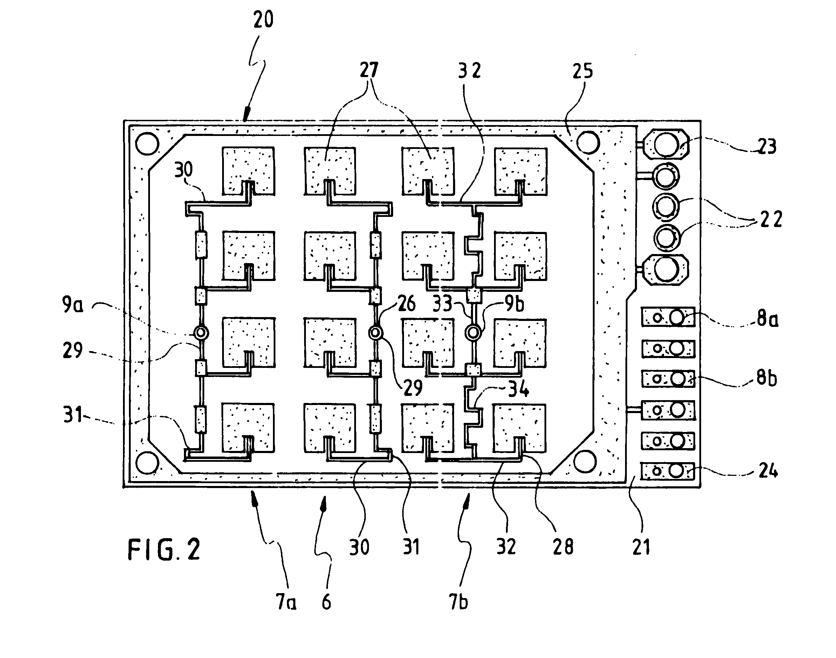

Die von dem Oszillator 4 erzeugte, hochfrequente Schwingung wird über eine HFtaugliche Leitung, vorzugsweise über einen Wellenleiter in Form einer Streifenleitung 5, an eine Sendeantenne 6 übertragen. Die Sendeantenne 6 kann verschieden aufgebaut sein, bspw. auch als Stielantenne; bevorzugt handelt es sich hierbei jedoch um eine Planarantenne, insbesondere um eine Patchantenne, ggf. mit mehreren Patches. wie sie in Fig. 2 zu sehen ist und weiter unten noch ausführlich beschrieben wird.

Das von der Sendentenne 6 ausgesandte Signal wird von nahegelegenen Objekten reflektiert und von zwei Empfangsantennen 7a, 7b des Radarsensors 1 wieder aufgefangen. Die beiden Empfangsantennen 7a, 7b sind vorzugsweise nach dem selben Prinzip aufgebaut wie die Sendeantenne 6, so dass sie ggf. miteinander an einem gemeinsamen Träger angeordnet und/oder in einem gemeinsamen Arbeitsschritt hergestellt werden bzw. sein können, also vorzugsweise ebenfalls in Form (je) einer Planarantenne, insbesondere einer Patchantenne, ggf. mit (jeweils) mehreren Patches. Ihr Aufbau im Einzelnen wird weiter unten beschrieben; an dieser Stelle soll nur darauf hingewiesen werden, dass die beiden Empfangsantennen 7a, 7b wie auch die Sendeantenne 6 gerichtete Antennen sind und derart ausgerichtet sind, dass ihre Vorzugsachsen (die Richtung von der Antenne zum jeweiligen Hauptmaximum des Antennendiagramms) parallel zueinander sind. Die beiden Empfangsantennen 7a, 7b sind allerdings seitlich gegeneinander versetzt, bspw. um einige Zentimeter, und sie haben unterschiedliche Antennendiagramme, d.h., ihre Hauptmaxima sind unterschiedlich breit (bezogen auf jeweils den selben Empfindlichkeitsabfall).

Die beiden Empfangsantennen 7a, 7b sind an ihrem jeweiligen schaltkreisseitigen Ausgang 8a, 8b weder parallelgeschalten noch an einen gemeinsamen Schalter angeschlossen. Die empfangenen Signale werden vielmehr getrennt voneinander weitergeleitet, vorzugsweise mit je einem Wellenleiter in Form einer (Mikro-) Streifenleitung 9a, 9b.

Zunächst kann je ein HF-Verstärker 10a, 10b angeschlossen sein, um bei einer geringen Empfangsfeldstärke die Eingangssignale auf eine zur weiteren Verarbeitung ausreichende Spannungsamplitude zu verstärken, und/oder um unterschiedliche Reichweiten bzw. Empfindlichkeitsmaxima der beiden Empfangsantennen 7a, 7b durch unterschiedlich eingestellte Verstärkungsfaktoren an den beiden HF-Verstärkern 10a, 10b zu kompensieren. Bei Antennen 7a, 7b mit einer ausreichenden Empfindlichkeit und/oder bei einer hohen Sendeleistung - die ggf. in einem mit dem Oszillator integrierten und/oder demselben nachgeschalteten Verstärker erzeugt werden kann - mögen derartige HF-Verstärker 10a, 10b evtl. entbehrlich sein.

Signalabwärts jedes Antennenausgangs 9a, 9b sowie ggf. eingeschleifter HF-Verstärker 10a, 10b befindet sich jeweils ein Mischer-Block, insbesondere je ein sog. I/Q-Mischer mit zwei Mischerzweigen 11a, 11b, 11c, 11d. Jedem dieser Mischerzweige wird jeweils neben dem - ggf. verstärkten Ausgangssignal 12a, 12b einer Empfangsantenne 7a, 7b zusätzlich noch ein vom Ausgangssignal des Oszillators 4 abgeleitetes bzw. von dem Sendesignal abgezweigtes Signal 13a - 13d zugeführt. Durch die gegenseitige Überlagerung dieser Signale 12a - 13a; 12a - 13b; 12b - 13c; 12b - 13d in jedem Mischer-Block 11a - 11d entstehen nach Art einer Signalmultiplikation bzw. -demodulation neben Signalanteilen mit einer oder mehreren Summenfrequenzen - welche im anschließenden herausgefiltert werden - auch jeweils Signalanteile 14a - 14d mit der Differenzfrequenz, also der sog. Dopplerfrequenz.

Damit hierbei die Amplitude als Information über das reflektierte Objekt ausgewertet werden kann - bspw. zur Lagebestimmung - ist sicherzustellen, dass die Amplitude der Mischer-Ausgangssignale 14a - 14d nicht durch die von der Laufzeit des Radarsignals beeinflußten, relativen Phasenlage zwischen den zu mischenden Signalen abhängt. Dies wird erreicht, indem pro Mischer-Block jeweils zwei Mischer 11a, 11b; 11c, 11d vorgesehen sind, denen jeweils dasselbe Antennensignal 12a; 12b, jedoch zwei von dem Sendesignal auf unterschiedliche Weise abgezweigte Signale 13a, 13b; 13c, 13d zugeführt sind: Jeweils ein vom Oszillator 4 abgezweigtes Signal 13a; 13c wird dem betreffenden Mischer 11a; 11c unverzögert bzw. in gemeinsamer, d.h. identischer Phasenlage zugeführt, während das zweite, mit dem Empfangssignal 12a; 12b zu mischende Signal 13b; 13d dem jeweils anderen Mischer 11b; 11 d demgegenüber phasenverschoben zugeführt wird, insbesondere um etwa 90° verzögert. Die beiden Ausgangssignale 14a, 14b; 14c, 14d eines sog. I/Q-Mischers können dann zu einem gemeinsamen Ausgangssignal verknüpft werden, bspw. durch Addition der quadrierten Werte: $a^2 + b^2$.

Am Ausgang jedes Mischer-Blocks 11a - 11d kann je ein weiterer Verstärker 15a - 15d angeschlossen sein, um die Mischerausgangssignale 14a - 14d auf ein für die weitere Verarbeitung ausreichendes Maß zu verstärken. Bei diesen Verstärkern 15a - 15d muß es sich jedoch nicht mehr um HF-Verstärker handeln, da die Dopplerfrequenz vergleichsweise niedrig ist. In manchen Fällen, insbesondere bei Verwendung von HF-Verstärkern 10a, 10b und/oder wenn eine entsprechende Funktionalität in den Mischer-Blöcken 11a- 11d integriert ist, können die Verstärker 15a - 15d auch entfallen.

An den Ausgängen 3a - 3d liegen also die nach dem I/Q-Prinzip herabgemischten und ggf. verstärkten Signale 16a - 16d der Empfangsantennen 7a, 7b an und stehen dort zur weiteren Verarbeitung zur Verfügung. Hier wird die Auswerteschaltung angekoppelt.

Die weitere Signalauswertung in der angeschlossenen Auswerteeinheit kann wahlweise auf analogem Weg erfolgen, bspw. mit analogen Schaltkreiselementen, oder auf digitalem Weg, insbesondere im Rahmen eines Mikro- oder Signalprozessors oder Mikrocontrollers. Im letzteren Fall ist eine Analog-Digital-Wandlung der herabgemischten und ggf. verstärkten Signale 16a - 16d an den Ausgängen 3a - 3d erforderlich, ggf. auch nach Durchführung einer analogen Verknüpfung, bspw. einer Addition der quadrierten Werte: $a^2 + b^2$ eines Mischer-Paares 11a, 11b; 11c, 11d. Zur Digitalisierung werden die Analogwerte 16a - 16d abgetastet und in je einen Digitalwert pro Abtastung umgewandelt. Dieser wird dann eingelesen und/oder für eine folgende oder spätere Auswertung als Digitalwert gespeichert.

Wie oben bereits ausgeführt, werden im Rahmen der Erfindung als Sende- und/oder Empfangsantennen 6, 7a, 7b vorzugsweise Patchantennen verwendet. Eine solche Anordnung ist in Fig. 2 im Einzelnen dargestellt.

Man erkennt die Umrisse einer Platine 20, die ggf. auch aus keramischem Material bestehen kann. Die Platine 20 ist zwischen 0,5 bis 5 mm stark, vorzugsweise nur zwischen 1 und 3 mm und kann ein- oder mehrlagig aufgebaut sein. Sie (oder ihre in Fig. 2 oberste Lage) ist auf beiden Seiten mit je einer elektrisch leitenden Lage, vorzugsweise aus Kupfer, versehen. Während die in Fig. 2 rückwärtige und daher nicht sichtbare Lage durchgehend metallisiert ist und somit eine Art elektrische Rückschlußfläche für das elektrische Feld bildet, sind in der sichtbaren Vorderseite 21 Strukturen eingearbeitet, bspw. eingeätzt.

In dem Layout erkennt man auf der rechten Seite einige Anschlußfahnen, deren interne Kontaktierung über rückwärtige Lagen von Leiterbahnen erfolgt. Neben Anschlüssen 22, 23 für Erd- bzw. Massepotentialen gibt es weitere Anschlüsse 24, 8a, 8b zum Kontaktieren der Sende- und Empfangsantennen 6, 7a, 7b.

Da im vorliegenden Fall die drei Antennen 6, 7a, 7b auf der Vorderseite 21 der Platine 20 von einer der Abschirmung dienenden, konstantes Potential führenden Struktur 25 rahmenförmig umschlossen ist, sind die Anschlüsse 24, 8a, 8b über ggf. teilweise rückwärtig verlegte Wellenleiter 26, 9a, 9b mit den eigentlichen Antennen 6, 7a, 7b verbunden.

Die drei Antennen 6, 7a, 7b sind innerhalb der rahmenförmigen, etwa rechteckförmigen Leiterstruktur 25 nebeneinander auf der Vorderseite 1 der Platine 20 angeordnet, und zwar befindet sich die Sendeantenne 6 zwischen den beiden Empfangsantennen 7a, 7b.

Jede der drei Antennen 6, 7a, 7b ist als Array aufgebaut, d.h. aus einer Mehrzahl von sog. Patches 27. Bei diesen Patches 27 handelt es sich um etwa quadratische Leiterflächen mit einer von der Wellenlänge der Radarfrequenz abhängigen Kantenlänge, insbesondere einer Kantenlänge von etwa $\lambda/2$, bezogen auf die Radarfrequenz, so dass sich jeweils stehende Wellen ausbilden können.

Die Patches 27 sind in einem Raster angeordnet, so dass ihre Kanten rechtwinklig oder parallel zueinander sind oder miteinander fluchten. An je einer Seite - vorzugsweise jeweils an der selben Seite - weisen die Patches 27 jeweils eine kleine Einbuchtung auf, wo sich je ein Anschluss für (je) eine Streifenleitung 28 befindet. Dadurch wird der eigentliche Anschlußpunkt in das betreffende Patch 27 hinein verlagert, wodurch dessen Ankopplung verbessert wird, insbesondere intensiviert. Jede Streifenleitung 28 bildet mit der rückwärtigen, nicht sichtbaren Potential- oder Massefläche einen Wellenleiter mit einem definierten Wellenwiderstand. Durch die Anordnung in einem einheitlichen Abstand gegenüber der Rückschlußfläche sind die einzelnen Leiterabschnitte hinsichtlich des Wellenwiderstandes einander angepaßt, so dass die Entstehung unerwünschter Reflexionen so weit als möglich vermieden ist.

Zunächst soll der Aufbau der Sendeantenne 6 beschrieben werden. Diese umfaßt insgesamt vier Patches 27, welche in einer Reihe angeordnet sind, und zwar nach Art einer Spalte einer Matrix allesamt übereinander. Die beiden mittleren Patches 27 der Sendeantenne 6 sind über je einen kurzen Wellenleiterabschnitt 29 miteinander sowie mit der gemeinsamen Zuleitung 26 verbunden; die beiden äußeren Patches 27 sind über je einen kurzen Wellenleiterabschnitt 30 an den Wellenleiterabschnitt 29 des benachbarten, innen liegenden Patches 27 verbunden. In den beiden äußeren Wellenleiterabschnitten 30 ist je eine mäanderförmige Verzögerungsleitung 31 vorgesehen, um eine Phasenverschiebung zwischen den Signalen an den inneren Patches 27 und den Signalen an den außen (d.h. am oberen und unteren Ende der Patch-Spalten) liegenden Patches 27 hervorzurufen. An den Verbindungsstellen zwischen den Wellenleiterabschnitten 29 und 30 sowie in den äußeren Wellenleiterabschnitten 30 sind jeweils der Anpassung bzw. Dämpfung dienende, rechteckig verdickte Leiterflächen vorgesehen.

Aufgrund der säulenartigen Struktur ist die Richtwirkung dieser Antenne 6 in vertikaler Richtung viel stärker als in horizontaler Richtung - die Sendeleistung wird also in vertikaler Richtung auf eine etwa horizontale Ebene gebündelt, in azimutaler Richtung jedoch weitaus weniger gebündelt, sondern relativ breit gefächert abgestrahlt. Das dreidimensionale Antennendiagramm ist demnach etwa eine breite, horizontale Scheibe.

Alle Empfangsantennen 7a, 7b befinden sich auf gleicher Höhe - nämlich innerhalb der Ebene mit erhöhter, weil gebündelter Sendeleistung - in der Fig. 2 ist die Empfangsantenne 7a links von der Sendeantenne 6 zu finden, die Empfangsantenne 7b dagegen rechts von der Sendeantenne 6.

Die Empfangsantenne 7a ist identisch bzw. spiegelbildlich zu der Sendeantenne 6 aufgebaut und hat demnach dasselbe Antennendiagramm wie letztere - eine starke Bündelung in vertikaler Strahlrichtung, jedoch eine breite Fächerung bzw. ein breites Hauptmaximum innerhalb dieser horizontalen Ebene. Die Wellenleiter 29, 30 sind entlang der einander abgewandten Seiten der spaltenförmig aneinandergereihten Patches 27 der beiden Antennen 6, 7a angeordnet, um ein direktes Überkoppeln so weit als möglich auszuschließen.

Während die Sendeantenne 6 und die erste Empfangsantenne 7a zusammengenommen etwa eine Hälfte der Fläche innerhalb der rahmenförmigen Struktur 25 bedecken, erstreckt sich die zweite Empfangsantenne 7b etwa über die andere Hälfte dieses umrandeten Bereichs.

Die Empfangsantenne 7b umfaßt zwei spaltenförmige Reihen von jeweils vier Patches 27, insgesamt also acht Patches 27. Je zwei nebeneinander bzw. auf gleicher Höhe liegende Patches 27 dieser Empfangsantenne 7b sind durch je einen Wellenleiterabschnitt 32 miteinander verbunden. Diese vier Patch-Verbindungen 32 sind in der Mitte zwischen diesen beiden Patch-Spalten durch weitere Wellenleiterabschnitte 33 wiederum untereinander verbunden, wobei die beiden inneren Patch-Verbindungen 32 direkt miteinander und mit dem gemeinsamen Wellenleiterausgang 8b verbunden sind, während die beiden außen liegenden Patch-Verbindungen 32 an der jeweils benachbarten, innen liegenden Patch-Verbindung 32 angeschlossen sind. In den beiden äußeren Wellenleiterabschnitten 33 sind mäanderförmige Verzögerungsleitungen 34 vorgesehen, um eine Phasenverschiebung zwischen den Signalen an den inneren Patches 27 und den Signalen an den außen (d.h. am oberen und unteren Ende der Patch-Spalten) liegenden Patches 27 hervorzurufen.

Aufgrund ihrer doppelten Spaltenzahl gegenüber der Empfangsantenne 7a hat die Empfangsantenne 7b auch in horizontaler bzw. azimutaler Richtung eine stärkere Richtcharakteristik, also eine schmälere Hauptkeule des Antennendiagramms.

Der erfindungsgemäße Radarsensor 1 dient vornehmlich der Steuerung von Türöffnern. Dabei ist es möglich, mit dem HF-Teil 2 unterschiedliche Funktionalitäten einzustellen. Insbesondere könnte im Rahmen der weiteren Verarbeitung auf bspw. digitalem Weg eine (statische) Auswahl zwischen einer breiten, weitgehend ungerichteten Empfindlichkeit und einer schmalen, stärker gerichteten Empfindlichkeit getroffen werden, entsprechend der Auswahl der Signale 16a, 16b von der Empfangsantenne 7a oder der Signale 16c, 16d von der Empfangsantenne 7b.

In einem weiteren Betriebsmodus kann die Auswerteeinheit zwischen diesen beiden Auswahlmöglichkeiten in regelmäßigen, kurzen Zeitintervallen selbst hin und her wechseln. Durch Einlesen der Signale 16a - 16d beider Empfangsantennen 7a, 7b und deren - ggf. sequentielle - Auswertung kann die Auswerteeinheit weitere Informationen erhalten, insbesondere, ob sich ein reflektierendes Objekt im Zentrum des überwachten Bereichs befindet oder an dessen Rand. Bei einer noch differenzierteren Auswertung können sogar Aufschlüsse darüber erhalten werden, auf welcher Seite des Zentrums sich ein Objekt befindet.

## Patentansprüche

1. Radarsensor (1) zur Erfassung der Lage reflektierender Objekte als Projektion auf eine horizontale Ebene, mit einer Sendeantenne (6) zum Abstrahlen eines Mikrowellensignals sowie mit wenigstens zwei Antennen (7a,7b) zum Empfang reflektierter Signalanteile, welche gleichzeitig mit der Sendeantenne (6) betreibbar sind und daher das reflektierte Signal simultan mit dessen Abstrahlung auffangen können, und mit einem Hochfrequenzteil (2) mit Sende- und Empfangszweigen, wobei jeder Empfangsantennenzweig fest verdrahtet ist, um die von den Empfangsantennen (7a,7b) empfangenen Signale getrennt voneinander weiterzuleiten, wobei wenigstens zwei voneinander getrennte Empfangsantennen (7a;7b) unterschiedliche Antennendiagramme aufweisen, wobei die Breite der Empfangskeule des Hauptmaximums einer Empfangsantenne (7a;7b) größer ist als die Breite der Empfangskeule des Hauptmaximums einer andern, davon getrennten Empfangsantenne (7b;7a), **dadurch gekennzeichnet, dass** das Antennendiagramm der Empfangsantenne (7a;7b) mit der schmäleren Empfangskeule in einer horizontalen Ebene vollständig von dem Antennendiagramm der anderen Empfangsantenne (7b;7a) mit der breiteren Empfangskeule überdeckt wird.

2. Radarsensor nach Anspruch 1, **dadurch gekennzeichnet, dass** die Breite des Hauptmaximums einer Empfangsantenne (7a;7b) wenigstens um den Faktor 1,2 größer ist als die Breite des Hauptmaximums der andern Empfangsantenne (7b;7a).

**3.** Radarsensor nach einem der vorhergehenden Ansprüche, **dadurch gekennzeichnet, dass** die beiden Empfangsantennen (7a,7b) derart parallel zueinander ausgerichtet sind, dass die Richtungen zu ihrem jeweiligen Empfindlichkeits-Hauptmaximum parallel zueinander sind oder um weniger als 5° gegeneinander abweichen, vorzugsweise um weniger als 2°, insbesondere um weniger als 1°.

**4.** Radarsensor nach einem der vorhergehenden Ansprüche, **dadurch gekennzeichnet, dass** die Breite des Hauptmaximums der Sendeantenne (6) gleich oder größer ist als die Breite des Hauptmaximums wenigstens zweier Empfangsantennen (7a,7b).

**5.** Radarsensor nach einem der vorhergehenden Ansprüche, **dadurch gekennzeichnet, dass** wenigstens zwei Empfangsantennen (7a,7b) in horizontaler und/oder in vertikaler Richtung gegeneinander versetzt sind.

**6.** Radarsensor nach einem der vorhergehenden Ansprüche, **dadurch gekennzeichnet, dass** die Empfangsantennen (7a,7b) gegeneinander in einer Richtung quer zu Ihrer Hauptstrahlcharakteristik versetzt angeordnet sind.

**7.** Radarsensor nach einem der vorhergehenden Ansprüche, **dadurch gekennzeichnet, dass** die Sendeantenne (6) zwischen wenigstens zwei Empfangsantennen (7a,7b) angeordnet ist.

**8.** Radarsensor nach einem der vorhergehenden Ansprüche, **dadurch gekennzeichnet, dass** wenigstens zwei Empfangsantennen (7a,7b) in der selben Technik ausgebildet sind, vorzugsweise in der selben Technik wie die Sendeantenne (6).

**9.** Radarsensor nach einem der vorhergehenden Ansprüche, **dadurch gekennzeichnet, dass** eine oder wenigstens zwei Empfangsantennen (7a,7b) und/oder die Sendeantenne (6) als Planarantenne(n) ausgebildet ist/sind, insbesondere als Streifenleitungsantenne.

**10.** Radarsensor nach einem der vorhergehenden Ansprüche, **dadurch gekennzeichnet, dass** eine oder wenigstens zwei Empfangsantennen (7a,7b) und/oder die Sendeantenne (6) als Patchantenne(n) ausgebildet ist/sind.

**11.** Radarsensor nach einem der vorhergehenden Ansprüche, **gekennzeichnet durch** einen sensorinternen Oszillator (4), an den die Sendeantenne (6) gekoppelt ist.

**12.** Radarsensor nach Anspruch 11, **dadurch gekennzeichnet, dass** der Oszillator (4) in seiner Frequenz entweder fest eingestellt oder veränderbar ist.

**13.** Radarsensor nach einem der vorhergehenden Ansprüche, **dadurch gekennzeichnet dass** der Radarsensor einen Hochfrequenzteil (2) aufweist mit einem Verstärker (10a, 10b) und/oder mit einem Vorverstärker, der am Ausgang (8a,8b) einer oder wenigstens zweier Empfangsantennen angeordnet ist.

**14.** Radarsensor nach einem der vorhergehenden Ansprüche, **dadurch gekennzeichnet dass** der Radarsensor einen Hochfrequenzteil (2) aufweist mit einem Demodulator, insbesondere in Form eines Mischer-Blocks {11a,11b), der an den Ausgang (8a,8b) einer oder wenigstens zweier Empfangsantennen (7a,7b) angekoppelt ist, ggf. über einen Verstärker (10a,10b) und/oder über einen Vorverstärker oder HF-Verstärker.

**15.** Radarsensor nach einem der vorhergehenden Ansprüche, **gekennzeichnet durch** eine gemeinsame Auswerteeinheit, die an den Ausgang (8a,8b) wenigstens zweier Empfangsantennen (7a,7b) angekoppelt ist, vorzugsweise über HF- oder NF-Verstärker (10a,10b;7a,7b) und/oder über Mischer-Blöcke (11a,11b).

**Claims**

**1.** Radar sensor (1) for sensing the position of reflecting objects as a projection onto a horizontal plane, with a transmitting antenna (6) for radiating a microwave signal, as well as with at least two antennas (7a,7b) for receiving reflected signal portions, which can be operated simultaneously with the transmitting antenna (6) and therefore can receive the reflected signal simultaneously to its radiation, and with a high frequency circuit (2) with transmitting and receiving branches, wherein each receiving antenna branch is hardwired to forward the signals received by the receiving antennas (7a,7b) separate from each other, wherein at least two receiving antennas (7a,7b) apart from each other comprise different antenna patterns, whereby the width of the receiving beam of the main maximum of a receiving antenna (7a;7b) is greater than the width of the receiving beam of the main maximum of another, separate receiving antenna (7a;7b), **characterized in that** the antenna pattern of the receiving antenna (7a;7b) with the narrower receiving beam in a horizontal plane is completely overlaid by the antenna pattern of the other receiving antenna (7b;7a) with the wider receiving beam.

**2.** Radar sensor according to claim 1, **characterized**

**in that** the width of the main maximum of a receiving antenna (7a;7b) is at least 1.2 times greater than the width of the main maximum of the other receiving antenna (7b;7a).

3. Radar sensor according to one of the previous claims, **characterized in that** the both receiving antennas (7a,7b) are aligned in parallel with each other in such way that the directions to their regarding main maxima of sensitivity are parallel with each other or differs only less than 5°, preferably less then 2°, especially less than 1°,

4. Radar sensor according to one of the previous claims, **characterized in that** the width of the main maximum of the transmitting antenna (6) is equal to or greater than the width of the main maximum of at least two receiving antennas (7a,7b).

5. Radar sensor according to one of the previous claims, **characterized in that** at least two receiving antennas (7a, 7b) are displaced with regard to each other in a horizontal direction and/or in a vertical direction.

6. Radar sensor according to one of the previous claims, **characterized in that** the receiving antennas (7a,7b) are displaced with regard to each other in a direction transverse to their main beam characteristic.

7. Radar sensor according to one of the previous claims, **characterized in that** the transmitting antenna (6) is arranged between at least tow receiving antennas (7a,7b).

8. Radar sensor according to one of the previous claims, **characterized in that** at least two receiving antennas (7a, 7b) are embodied in the same technology, preferably in the same technology as the transmitting antenna (6).

9. Radar sensor according to one of the previous claims, **characterized in that** one or at least two receiving antennas (7a,7b) and/or the transmitting antenna (6) is/are embodied as planar antenna(s), especially as microstrip antenna.

10. Radar sensor according to one of the previous claims, **characterized in that** one or at least two receiving antennas (7a,7b) and/or the transmitting antenna (6) is/are embodied as patch antenna(s).

11. Radar sensor according to one of the previous claims, **characterized by** an oscillator (4) inside the sensor, to which the transmitting antenna (6) is coupled.

12. Radar sensor according to claim 11, **characterized in that** the frequency of the oscillator (4) is either fixedly adjusted or variable.

13. Radar sensor according to one of the previous claims, **characterized in that** the radar sensor comprises a high frequency circuit (2) with an amplifier (10a, 10b) and/or with a preamplifier, which is arranged at the output (8a,8b) of one or at least two receiving antennas.

14. Radar sensor according to one of the previous claims, **characterized in that** the radar sensor comprises a high frequency circuit (2) with a demodulator, especially in the form of a mixer block (11a, 11b), which is coupled to the output (8a,8b) of one or at least two receiving antennas (7a,7b), if applicable via an amplifier (10a, 10b) and/or via a preamplifier or a HF amplifier.

15. Radar sensor according to one of the previous claims, **characterized by** a common evaluation device coupled to the output (8a,8b) of at least two receiving antennas (7a,7b), preferably via a HF or LF amplifier (10a, 10b;7a,7b) and/or via mixer blocks (11a, 11b).

**Revendications**

1. Capteur radar (1) pour la saisie de la position d'objets réfléchissants sous forme de projection sur un plan horizontal, comportant une antenne d'émission (6) pour le rayonnement d'un signal micro-ondes ainsi qu'au moins deux antennes (7a, 7b) pour la réception de composantes de signaux réfléchies, lesquelles sont exploitables en même temps avec l'antenne d'émission (6) et qui peuvent donc capter le signal réfléchi simultanément avec son rayonnement, et comportant une partie haute fréquence (2) avec des branches d'émission et de réception, chaque branche d'antenne de réception étant câblée à demeure pour transmettre séparément les uns des autres les signaux reçus par les antennes de réception (7a, 7b), en ce qu'au moins deux antennes de réception (7a; 7b) séparées les unes des autres présentent des diagrammes d'antennes différents, en ce que la largeur du lobe de réception du maximum principal d'une antenne de réception (7a ; 7b) est supérieure à la largeur du lobe de réception du maximum principal d'une autre antenne de réception qui en est séparée (7b ; 7a), **caractérisé en ce que le** diagramme d'antenne de l'antenne de réception (7a; 7b) avec le lobe de réception le plus étroit est recouvert dans un plan horizontal entièrement par le diagramme d'antenne de l'autre antenne de réception (7b ; 7a) avec le lobe de réception le plus large.

**2.** Capteur radar selon la revendication 1, **caractérisé en ce que** la largeur du maximum principal d'une antenne de réception (7a; 7b) est supérieur d'au moins le facteur 1,2 à la largeur du maximum principal de l'autre antenne de réception (7b ; 7a).

**3.** Capteur radar selon l'une des revendications précédentes, **caractérisé en ce que** les deux antennes de réception (7a, 7b) sont alignées parallèlement l'une par rapport à l'autre de façon telle que les directions par rapport à leur maximum principal de sensibilité respectif sont parallèles l'une par rapport à l'autre ou différent l'une de l'autre de moins de 5°, de préférence de moins de 2°, en particulier de moins de 1 °.

**4.** Capteur radar selon l'une des revendications précédentes, **caractérisé en ce que** la largeur du maximum principal de l'antenne d'émission (6) est égale ou supérieure à la largeur du maximum principal d'au moins deux antennes de réception (7a, 7b).

**5.** Capteur radar selon l'une des revendications précédentes, **caractérisé en ce qu'**au moins deux antennes de réception (7a, 7b) sont décalées l'une par rapport à l'autre dans le sens horizontal et/ou dans le sens vertical.

**6.** Capteur radar selon l'une des revendications précédentes, **caractérisé en ce que** les antennes de réception (7a, 7b) sont disposées de manière décalée l'une par rapport à l'autre dans une direction transversale par rapport à leur caractéristique de rayonnement principal.

**7.** Capteur radar selon l'une des revendications précédentes, **caractérisé en ce que** l'antenne d'émission (6) est disposée entre au moins deux antennes de réception (7a, 7b).

**8.** Capteur radar selon l'une des revendications précédentes, **caractérisé en ce qu'**au moins deux antennes de réception (7a, 7b) sont réalisées selon la même technique, de préférence selon la même technique que l'antenne d'émission (6).

**9.** Capteur radar selon l'une des revendications précédentes, **caractérisé en ce qu'**une ou au moins deux antennes de réception (7a, 7b) et/ou l'antenne d'émission (6) est/sont réalisée(s) sous forme d'antenne(s) planaire(s), en particulier sous forme d'antenne à ligne à ruban.

**10.** Capteur radar selon l'une des revendications précédentes, **caractérisé en ce qu'**une ou au moins deux antennes de réception (7a, 7b) et/ou l'antenne d'émission (6) est/sont réalisée(s) sous forme d'antenne(s) patch.

**11.** Capteur radar selon l'une des revendications précédentes, **caractérisé par** un oscillateur (4) interne au capteur auquel est couplée l'antenne d'émission (6).

**12.** Capteur radar selon la revendication 11, **caractérisé en ce que** la fréquence de l'oscillateur (4) est réglée soit à demeure ou est modifiable.

**13.** Capteur radar selon l'une des revendications précédentes, **caractérisé en ce que** le capteur radar présente une partie haute fréquence (2) avec un amplificateur (10a, 10b) et/ou un préamplificateur, qui est disposé à la sortie (8a, 8b) d'une ou d'au moins deux antennes de réception.

**14.** Capteur radar selon l'une des revendications précédentes, **caractérisé en ce que** le capteur radar présente une partie haute fréquence (2) avec un démodulateur, en particulier sous forme d'un bloc mélangeur (11 a, 11 b) qui est accouplé à la sortie (8a, 8b) d'une ou d'au moins deux antennes de réception (7a, 7b), le cas échéant par le biais d'un amplificateur (10a, 10b) et/ou d'un préamplificateur ou amplificateur HF.

**15.** Capteur radar selon l'une des revendications précédentes, **caractérisé par** une unité d'analyse commune, qui est accouplée à la sortie (8a, 8b) d'au moins deux antennes de réception (7a, 7b), de préférence via des amplificateurs HF ou BF (10a, 10b; 7a, 7b) et/ou via des blocs mélangeurs (11 a, 11 b).

FIG.1

FIG.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19829762 A1
- EP 1548458 A2